# FASCICULE DE BREVET EUROPEEN

(11) **EP 3 684 742 B1**
(45) Date de publication et mention de la délivrance du brevet: **25.10.2023**
(21) Numéro de dépôt: 18780190.7
(22) Date de dépôt: 13.09.2018
(51) Int. Cl.: C04B 35/80, F01D 25/24, F01D 11/00, F01D 9/04, F01D 5/28, C04B 35/573, C04B 35/584, C04B 35/583, C04B 35/58, C04B 35/563, C04B 35/56, C04B 35/634, C04B 35/628, C04B 35/626, C04B 35/565, F02K 1/82, F23R 3/00, F23R 3/60, B29C 70/48

(54) **PROCEDE DE FABRICATION D'UNE PIECE EN CMC**
VERFAHREN ZUR HERSTELLUNG EINES TEILS AUS CMC
PROCESS FOR THE MANUFACTURE OF A CMC PART

(30) Priorité: 21.09.2017 FR 1758751
(43) Date de publication de la demande: 29.07.2020
(73) Titulaire: Safran Ceramics, 33185 Le Haillan (FR)
(72) Inventeur: CARLIN, Maxime, François, Roger, 77550 Moissy-Cramayel (FR); EBERLING-FUX, Nicolas, 77550 Moissy-Cramayel (FR); GOULLIANNE, Eddy, 77550 Moissy-Cramayel (FR); TESSON, Thierry, Guy, Xavier, 77550 Moissy-Cramayel (FR)
(74) Mandataire: Cabinet Beau de Loménie
(86) Numéro de dépôt international: PCT/FR2018/052254
(87) Numéro de publication internationale: WO 2019/058046

(56) Documents cités:
- EP-A1- 3 050 863
- WO-A1-2010/103213
- WO-A1-2011/070294
- WO-A1-2016/001343
- WO-A1-2016/133990

## Description

### DOMAINE DE L'INVENTION

Le présent exposé concerne un procédé de fabrication d'une pièce en CMC, c'est-à-dire en matériau composite à matrice céramique, munie d'au moins une découpe.

Un tel procédé de fabrication peut notamment être utilisé dans le domaine de l'aéronautique afin de fabriquer des pièces capables de résister à de hautes températures. Il peut notamment s'agir de secteurs d'un organe cylindrique d'une turbomachine, telle qu'un turboréacteur d'aéronef, et tout particulièrement de secteurs d'anneau de turbine, pour ne citer que ces exemples.

### ETAT DE LA TECHNIQUE ANTERIEURE

Les turbines de turboréacteur comprennent un anneau permettant de réaliser la veine externe de la turbine. Classiquement, cet anneau est divisé en plusieurs secteurs assemblés les uns à côté des autres de sorte à former un anneau complet. Dès lors, afin d'assurer l'étanchéité de l'anneau, des rainures sont pratiquées sur les faces inter-secteurs de chaque secteur et des languettes métalliques sont insérées dans ces rainures afin de relier les secteurs deux à deux.

En raison des très fortes températures régnant dans ces turbines, les secteurs d'anneau sont réalisés en CMC. Les languettes métalliques sont quant à elles réalisées généralement en alliage base nickel ou cobalt, ou à base d'autres matériaux résistant à des températures élevées.

Les rainures, possédant typiquement une largeur de 0,4 à 1 mm, sont habituellement réalisées par usinage. Toutefois, cette méthode présente l'inconvénient de mettre à nu les fibres du renfort fibreux présent au sein du secteur en CMC, ce qui entraîne une corrosion et/ou une oxydation accélérée de la pièce ainsi soumise à de fortes températures.

Or, en raison de leur profondeur importante par rapport à leur largeur réduite, il est difficile si ce n'est impossible de déposer un revêtement de protection au fond des rainures par voie de projection thermique.

De plus, l'usinage au sein du renfort fibreux de secteur d'anneau implique que l'état de surface des parois internes des rainures est assez irrégulier, avec notamment une rugosité moyenne arithmétique Ra supérieure à 6 µm, ce qui entraîne des défauts d'étanchéité entre les languettes métalliques et les secteurs d'anneau. On connaît également le document WO 2016/001343, qui décrit un procédé de fabrication d'une pièce composite CMC munie d'un revêtement de surface, WO 2010/103213 qui décrit un anneau de turbine comprenant une pluralité de secteurs en CMC, et WO 2011/070294, qui décrit une aube de turbine en CMC.

Il existe donc un réel besoin pour un procédé de fabrication d'une pièce en CMC ainsi qu'une telle pièce en CMC qui soient dépourvus, au moins en partie, des inconvénients inhérents à la méthode connue précitée.

### PRESENTATION DE L'INVENTION

Le présent exposé concerne un procédé de fabrication d'une pièce en CMC munie d'au moins une découpe, comprenant les étapes suivantes :
- fourniture d'un renfort fibreux,
- formation d'une cavité dans une portion du renfort fibreux,
- injection d'une barbotine comprenant au moins une poudre céramique et un solvant, la barbotine étant injectée de manière à imprégner le renfort fibreux et à remplir la cavité du renfort fibreux,
- séchage de l'ensemble obtenu,
- densification par infiltration d'un matériau de densification liquide et solidification dudit matériau de densification,
- usinage d'au moins une découpe dans la pièce brute obtenue au sein du volume correspondant à la cavité du renfort fibreux.

Ainsi, dans un tel procédé, la barbotine est injectée à la fois dans le renfort fibreux et dans le volume de la cavité formée dans le renfort fibreux. En conséquence, après séchage et densification de l'ensemble, on obtient une pièce brute possédant une première partie formée par le renfort fibreux noyé dans la matrice céramique et une deuxième partie, localisée au sein de la cavité du renfort, formée par de la matrice céramique dépourvue de renfort.

Dès lors, le volume situé au sein de la cavité du renfort fibreux est totalement dépourvu de fibres : il est donc possible d'usiner cette deuxième partie facilement et sans contraintes, sans mettre à nu de fibres du renfort fibreux. On réduit ainsi le risque de corrosion et/ou d'oxydation de la pièce, ce qui augmente sa durée de vie et réduit le recours à la maintenance.

De plus, en l'absence de fibres tissées, la structure de la deuxième partie de la pièce brute est plus homogène que la première partie, ce qui permet d'obtenir un état de surface plus régulier lors de l'usinage de la découpe de la pièce finale. On obtient ainsi un meilleur contact entre un élément inséré dans la rainure (une languette d'étanchéité par exemple) et cette dernière, ce qui permet d'atteindre par exemple un niveau d'étanchéité plus important.

Dans le présent exposé, les termes « axial », « radial », « tangentiel », « intérieur », « extérieur » et leurs dérivés sont définis par rapport à l'axe principal de la turbomachine ; on entend par « plan axial » un plan passant par l'axe principal de la turbomachine et par « plan radial » un plan perpendiculaire à cet axe principal ; enfin, les termes « amont » et « aval » sont définis par rapport à la circulation de l'air dans la turbomachine.

Dans certains modes de réalisation, le renfort fibreux est réalisé par tissage, de préférence par tissage 3D. Le tissage 3D permet notamment d'obtenir des renforts fibreux possédant des géométries complexes en un seul tenant, assurant ainsi une très bonne tenue mécanique à la pièce finale.

Dans certains modes de réalisation, le renfort fibreux comprend des fibres de SiC, de préférence au moins 50% de fibres de SiC, de préférence encore au moins 95% de fibres de SiC. Toutefois, n'importe quel type de fibre céramique pourrait également être utilisé et notamment des fibres de carbone.

Dans certains modes de réalisation, au cours de l'étape d'injection de la barbotine, la barbotine est injectée de manière à remplir en outre un volume situé à la surface de la portion du renfort fibreux dans laquelle a été formée la cavité. Ceci permet de protéger complètement la face de la pièce portant la découpe, y compris sur les bords de ladite découpe. En particulier, ceci permet une meilleure densification en surface de cette portion de préforme.

Dans certains modes de réalisation, la poudre céramique de la barbotine comprend du SiC, de préférence au moins 50% de SiC, de préférence encore au moins 95% de SiC. Toutefois, n'importe quel type de poudre céramique pourrait également être utilisée et notamment du B, B₄C, TiC, ZrC, BN, Si₃N₄, ou encore TiSi₂.

Dans certains modes de réalisation, le diamètre moyen des particules de la poudre céramique de la barbotine est compris entre 0,1 µm et 10 µm, de préférence entre 0,5 µm et 5 µm. La réalisation d'une partie de pièce crue formée exclusivement de matrice céramique, hors du renfort fibreux, est délicate en raison du taux de porosité élevé laissé dans cette partie de la pièce crue après l'élimination du solvant. Ainsi, avant sa densification, cette deuxième partie de la pièce crue est très fragile et peut facilement s'effriter, se fissurer voire se décrocher complètement de la première partie munie du renfort fibreux, tout particulièrement si cette deuxième partie s'étend non seulement au sein de la cavité du renfort fibreux mais également en surface de ce dernier. Plusieurs paramètres permettent de renforcer cette deuxième partie de la pièce crue afin de réduire les risques d'endommagement mentionnés ci-dessus : parmi ces derniers figure le diamètre des particules de la poudre céramique. Ainsi, les inventeurs ont constaté que les gammes de diamètre proposées ci-dessus facilitaient la mise en oeuvre du présent procédé.

Dans certains modes de réalisation, le diamètre D50 des particules de la poudre céramique de la barbotine est compris entre 0,5 et 2µm. La distribution des particules de poudre peut être monomodale ou bimodale.

Dans certains modes de réalisation, le diamètre d10 des particules de la poudre céramique de la barbotine est supérieur à 0,1 µm.

Dans certains modes de réalisation, le diamètre d90 des particules de la poudre céramique de la barbotine est inférieur à 4 µm.

Dans certains modes de réalisation, le solvant de la barbotine est un solvant aqueux.

Dans certains modes de réalisation, la barbotine comprend un liant organique. Ce liant permet une meilleure tenue de la barbotine puis de la deuxième partie de pièce crue obtenue suite au séchage de la barbotine : ceci facilite notamment le démoulage de la pièce crue puis sa manipulation sans dommages.

Dans certains modes de réalisation, ledit liant organique comprend au moins un des composés suivants : alcool polyvinylique (PVA) ; polyvinylpyrrolidone (PvP) ; polyéthylène imine et polyéthylène glycol (PEG). Ces différents composés augmentent en effet sensiblement la tenue de la pièce crue.

Dans certains modes de réalisation, la concentration massique dudit liant organique par rapport à la masse de poudre est comprise entre 0,5 et 10%, de préférence entre 1 et 5%. De telles concentrations assurent une bonne efficacité au liant et donc une bonne tenue de la pièce crue.

Dans certains modes de réalisation, la barbotine comprend en outre un plastifiant et/ou un dispersant. Il peut notamment s'agir d'un plastifiant, ou d'un liant, du type PVA, PEG ou PvP. Un plastifiant augmente la tenue mécanique du cru céramique après injection : il permet d'abaisser la viscosité de la barbotine et apporte une souplesse au matériau cru. En ce qui concerne les dispersants, il peut s'agir de bases possédant un pH compris entre 8 et 12, de préférence entre 9 et 11, par exemple du type hydroxyde de tétraéthylammonium (TEAH), hydroxyde de tétraéméthylammonium (TMAH), ou hydroxyde de sodium (NaOH), ou des systèmes électrostériques, par exemple du type polyétherimide (PEI). Ces dispersants permettent de maintenir les particules en suspension par dispersion électrostatique.

Dans certains modes de réalisation, au moins un consommable est mis en place dans l'outillage contenant le renfort fibreux au cours de l'étape d'injection de la barbotine. Un tel consommable permet d'obtenir un état de surface prédéterminé dans la zone où il est placé. Divers consommables peuvent être utilisés et notamment des tissus, des élastomères et/ou des clinquants métalliques. Selon la zone de l'outillage, le consommable peut être poreux, ou non.

Dans certains modes de réalisation, l'étape de séchage comprend une étape de lyophilisation. Une telle étape de lyophilisation permet de réduire le risque de fissuration de la deuxième partie de la pièce crue lors de l'étape de séchage. Elle permet également d'assurer une bonne cohésion entre les première et deuxième parties de la pièce crue.

Dans certains modes de réalisation, l'étape de séchage comprend une étape d'évaporation contrôlée avec une rampe de températures croissante. Une telle évaporation contrôlée permet de maîtriser l'élimination du solvant, réduisant ainsi le risque de fissuration au cours de l'étape de séchage.

Dans certains modes de réalisation, l'étape de séchage comprend une étape de séchage du type Deliquoring au cours de laquelle la pièce est séchée par application d'un gradient de pression.

Dans certains modes de réalisation, la pente de la rampe de températures de l'étape d'évaporation contrôlée est comprise entre 1 et 5°C/min.

Dans certains modes de réalisation, la rampe de températures de l'étape d'évaporation contrôlée s'achève avec une température finale comprise entre 100 et 140°C, de préférence entre 115 et 125 °C.

Dans certains modes de réalisation, la rampe de températures de l'étape d'évaporation contrôlée débute à une température initiale comprise entre 30 et 70°C, de préférence entre 45 et 65°C.

Dans certains modes de réalisation, le taux de compaction de la poudre céramique hors du renfort fibreux à l'issue de l'étape de séchage est supérieur à 50%. Le taux de compaction correspond au taux de matière par rapport au volume de la pièce considérée : il traduit en particulier le taux de porosité de la pièce. Un tel taux de compaction assure une tenue suffisante à la deuxième partie de la pièce crue.

Dans certains modes de réalisation, le matériau de densification comprend du Si, de préférence au moins 50% en masse de Si, de préférence encore au moins 95% en masse de Si.

Dans certains modes de réalisation, le procédé comprend en outre une étape de recuit et de pré-frittage de la poudre céramique après l'étape d'injection de la barbotine et avant l'étape de densification. Ceci permet de renforcer la tenue de la pièce crue en créant des connexions entre les particules de poudre de céramique.

Dans certains modes de réalisation, l'étape de recuit et de pré-frittage est menée à une température comprise entre 1200 et 1600°C, de préférence entre 1300°C et 1500°C, pendant une durée comprise entre 30 min et 2h, de préférence entre 45 min et 1h30.

Dans certains modes de réalisation, l'étape de recuit et de pré-frittage est menée sous gaz neutre, par exemple sous Argon.

Dans certains modes de réalisation, la découpe usinée dans la pièce brute est une rainure. Toutefois, il va de soi que tout autre type de découpe peut être envisagé, et notamment des alésages, des encoches, des épaulements, des cavités, des repères etc. Plusieurs découpes de types différents peuvent également être usinées dans la même pièce brute.

Dans certains modes de réalisation, la rainure usinée dans la pièce brute possède une largeur inférieure à 1 mm.

Dans certains modes de réalisation, la rainure usinée dans la pièce brute possède une profondeur au moins trois fois plus importante que sa largeur.

Dans certains modes de réalisation, la rugosité moyenne arithmétique Ra des parois internes de la découpe usinée dans la pièce brute est inférieure à 5 µm, de préférence inférieure à 2 µm. Ceci permet à un élément inséré dans la découpe de s'appliquer plus étroitement contre la paroi de la découpe, assurant ainsi un niveau d'étanchéité plus élevé.

Dans certains modes de réalisation, l'étape d'usinage est réalisée par fraisage, rectification et/ou électroérosion.

Dans certains modes de réalisation, le procédé comprend en outre une étape de dépôt d'un revêtement de protection sur au moins une face de la pièce finale qui est dépourvue de découpe.

Dans certains modes de réalisation, la face de la pièce finale dans laquelle a été usinée la découpe est dépourvue de revêtement de protection. Un tel revêtement est notamment rendu inutile lorsque la barbotine a été injectée également en surface de cette face du renfort final.

Dans certains modes de réalisation, le procédé comprend en outre, avant l'étape d'injection de la barbotine, une étape de dépôt d'interphase prévue pour gainer les fibres du renfort fibreux avec un matériau d'interphase.

Dans certains modes de réalisation, l'étape de dépôt d'interphase est réalisée par voie gazeuse.

Dans certains modes de réalisation, le matériau d'interphase comprend du SiC et/ou du BN, de préférence au moins 50% de SiC, de préférence encore au moins 95% de SiC.

Dans certains modes de réalisation, le procédé comprend en outre une étape de préparation. Il peut notamment s'agir d'une étape de sablage ou de toute autre étape permettant d'augmenter localement la rugosité de la surface de la pièce.

Dans certains modes de réalisation, ladite pièce en CMC est une pièce aéronautique, par exemple une pièce de chambre de combustion ou de turbine. Il peut notamment s'agir d'un secteur d'anneau de turbine.

Le présent exposé concerne également, sans toutefois la revendiquer, une pièce en CMC, munie d'au moins une découpe, obtenue à l'aide d'un procédé selon l'un quelconque des modes de réalisation précédents.

Le présent exposé concerne en outre, sans toutefois la revendiquer, une turbine, comprenant un anneau comportant au moins deux secteurs d'anneau, muni chacun d'une rainure sur chacune de ses faces d'extrémité tangentielle, et une languette d'étanchéité engagée dans les rainures de deux secteurs d'anneau consécutifs, dans laquelle au moins un desdits secteurs d'anneau est une pièce en CMC selon l'un quelconque des modes de réalisation précédents.

Le présent exposé concerne également, sans toutefois la revendiquer, une turbomachine comprenant au moins une pièce en CMC ou une turbine selon l'un quelconque des modes de réalisation précédents.

Les caractéristiques et avantages précités, ainsi que d'autres, apparaîtront à la lecture de la description détaillée qui suit, d'exemples de réalisation du procédé proposé. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.
La FIG 1 est un plan en coupe d'une turbomachine selon le présent exposé.
La FIG 2 est une vue schématique d'un anneau de turbine sectorisé.
La FIG 3 est une vue en perspective d'un secteur d'anneau selon le présent exposé.
La FIG 4 illustre les étapes successives d'un premier exemple de procédé selon l'exposé.
La FIG 5 illustre l'évolution de la pièce au cours de ce premier exemple de procédé.
La FIG 6 illustre l'évolution de la pièce au cours d'un deuxième exemple de procédé.

### DESCRIPTION DETAILLEE D'EXEMPLE(S) DE REALISATION

Afin de rendre plus concrète l'invention, des exemples de procédés sont décrits en détail ci-après, en référence aux dessins annexés. Il est rappelé que l'invention ne se limite pas à ces exemples.

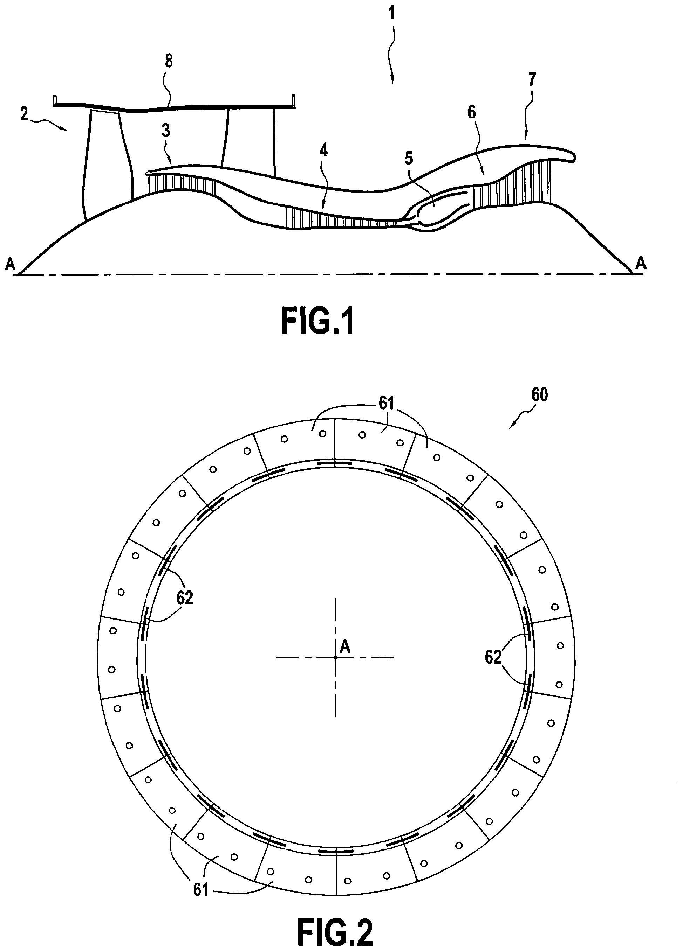

La FIG 1 représente, en coupe selon un plan vertical passant par son axe principal A, un turboréacteur à double flux 1 selon l'invention. Il comporte, d'amont en aval selon la circulation du flux d'air, une soufflante 2, un compresseur basse pression 3, un compresseur haute pression 4, une chambre de combustion 5, une turbine haute pression 6, et une turbine basse pression 7.

La FIG 2 illustre l'anneau 60 de la turbine haute pression 6 définissant la limite extérieure de la veine d'air au sein de la turbine haute pression 6. Cet anneau 60 est divisé en plusieurs secteurs 61 en CMC, sensiblement identiques, reliés par des languettes métalliques d'étanchéité 62.

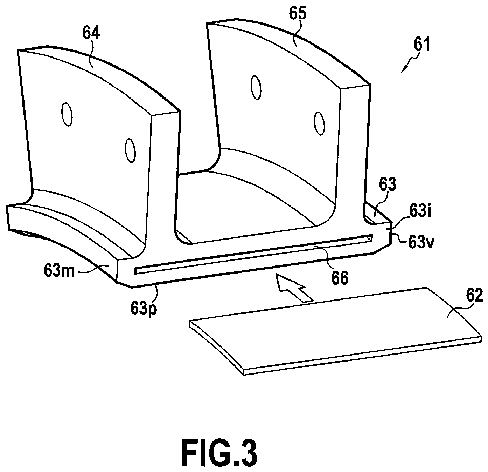

La FIG 3 illustre un tel secteur 61 : il comprend une paroi de veine 63, une bride amont 64 et une bride aval 65. La paroi de veine 63, ayant la forme d'un secteur de cylindre, est configurée pour former conjointement avec les autres secteurs 61 un anneau cylindrique d'axe A. La paroi de veine possède une face principale interne 63p, destinée à délimiter la veine d'air, une face d'extrémité amont 63m, une face d'extrémité aval 63v et deux face latérales inter-secteurs 63i.

Une rainure 66 est pratiquée dans chaque face inter-secteurs 63i. Ces rainures 66, s'étendant axialement sur pratiquement toute la longueur de la paroi de veine 63, possèdent dans cet exemple une profondeur de 3 mm et une largeur de 0,5 mm. Les parois internes des rainures 66 possèdent une rugosité arithmétique moyenne Ra inférieure à 1,6 µm.

La languette 62, réalisée en alliage base nickel ou cobalt, possède une longueur sensiblement également à celle de la rainure 66 et une épaisseur légèrement inférieure à cette dernière afin de permettre l'insertion de la languette 62 dans une rainure 66.

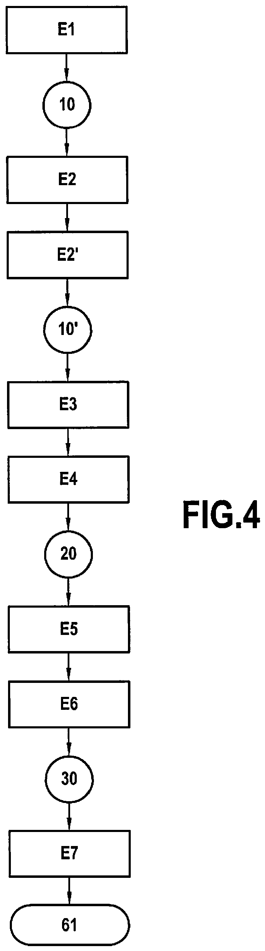

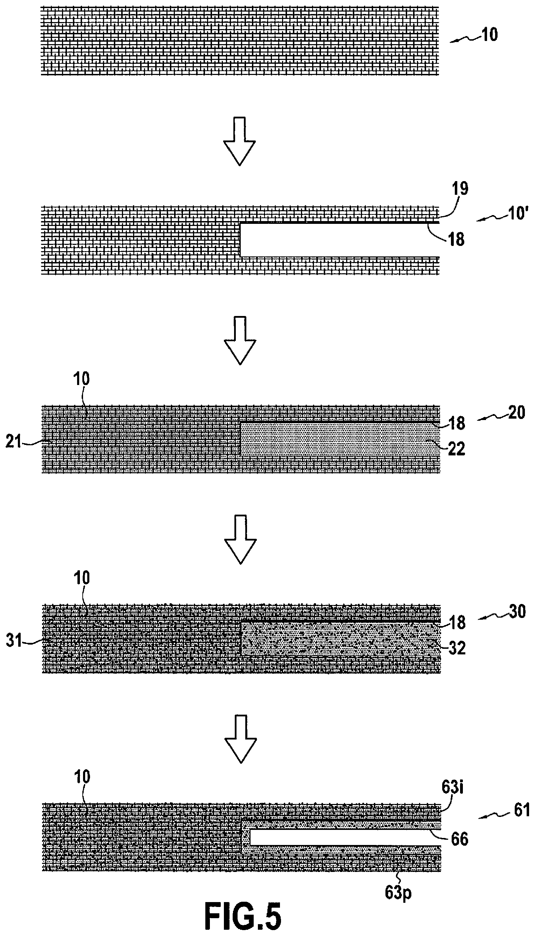

Les FIG 4 et 5 illustrent les différentes étapes d'un exemple de procédé selon l'exposé permettant de fabriquer un tel secteur d'anneau 61 en CMC, c'est-à-dire en matériau composite à matrice céramique. En particulier, la FIG 5 est une représentation schématique ne tenant pas compte de la forme exacte de la pièce.

Le procédé débute avec le tissage E1 d'une préforme fibreuse 10 qui jouera le rôle de renfort fibreux du secteur 61. Cette préforme 10 est de préférence tissée selon une technique de tissage 3D, connue par ailleurs, par exemple avec une armure du type interlock. Dans cet exemple, la préforme 10 est tissée avec des fibres de carbure de silicium SiC.

Une fois la préforme 10 terminée, elle est mise en forme et subit une étape E2 de dépôt d'interphase, connue par ailleurs, par exemple du type dépôt chimique en phase vapeur (également connue sous le nom CVD pour « Chemical Vapor Déposition »). Dans cet exemple, le matériau d'interphase déposé est du carbure de silicium SiC. Une gaine de SiC se forme donc autour des fibres de la préforme 10, ce qui consolide la préforme 10 et bloque la forme donnée lors de la mise en forme. A l'issue de cette étape E2 de dépôt d'interphase, les fibres de la préforme 10 sont donc revêtues d'une gaine d'interphase mais la préforme 10 reste encore très poreuse.

Au cours d'une étape d'usinage E2', une tranchée 18 est taillée dans chaque face latérale 19 de la préforme 10 correspondant aux faces inter-secteurs 63i du secteur final 61. On obtient alors une préforme consolidée et découpée 10'.

La préforme consolidée et découpée 10' est alors transférée dans un moule pour subir une étape E3 d'injection d'une barbotine céramique. Dans cet exemple, la barbotine comprend un solvant, ici de l'eau, une poudre céramique, ici du carbure de silicium SiC, et un liant organique, ici de l'alcool polyvinylique.

Dans cet exemple, la concentration de la poudre de SiC dans la barbotine est d'environ 20% en volume. La concentration du liant est pour sa part de 1% en masse par rapport à la masse de poudre de SiC en barbotine.

Le moule est prévu pour sa part de manière à épouser la forme de la préforme 10' tout en laissant un volume libre à l'intérieur des tranchées 18. Ainsi, lorsque la barbotine est injectée dans le moule, elle imprègne d'une part la préforme 10' et remplit d'autre part le volume libre à l'intérieur des tranchées 18 de la préforme 10'.

Une étape de séchage E4 est alors conduite pour éliminer le solvant de la barbotine. Il s'agit dans cet exemple d'une étape de lyophilisation (également connue sous son nom anglais de « freeze-drying »), au cours de laquelle le moule est porté brutalement à une température négative afin de solidifier le solvant puis réchauffé progressivement à très basse pression de manière à entraîner la sublimation du solvant pratiquement sans altération des matières environnantes, le solvant en phase gazeuse étant alors éliminé à l'aide d'un piège froid par exemple.

Selon une variante, l'étape de séchage E4 pourrait comprendre une étape d'évaporation contrôlée du solvant au cours de laquelle la température de l'enceinte est progressivement portée de 50 à 120 °C à raison d'une augmentation de 1 à 5°C/min, de préférence 1°C/min.

Selon encore une autre variante, l'étape de séchage E4 pourrait comprendre une étape de Deliquoring réalisée sous une pression comprise entre 50 et 100 mbar, pendant 1 à 2h.

Au cours de l'étape de séchage E4, au sein de la préforme 10', les particules céramiques de la barbotine décantent et se déposent sur les fibres de la préforme à mesure que le solvant est éliminé, remplissant ainsi une part des porosités de la préforme 10. Par ailleurs, au sein du volume libre, les particules de céramique s'agglomèrent et se lient les unes aux autres sous l'effet notamment du liant organique.

Ainsi, à l'issue de l'étape de séchage E4, on obtient une pièce crue 20 possédant une première partie 21 munie du renfort formé par la préforme fibreuse 10 et une deuxième partie 22, au sein des tranchées 18 et dépourvue du renfort fibreux 10, constituée de poudre céramique agglomérée possédant un taux de compaction supérieur à 50%.

La pièce crue 20 ainsi obtenue subit ensuite une étape E5 de recuit et de pré-frittage permettant de renforcer les connexions entre les particules de la poudre céramique et donc de renforcer la tenue de la pièce crue 20, surtout dans sa deuxième partie 21.

Dans cet exemple, le recuit a lieu sous gaz neutre, par exemple de l'argon, à une température de 1400 °C durant 1h.

Une fois cette étape E5 terminée, la pièce crue 20 est démoulée est transférée pour subir une étape de densification E6. Au cours de cette étape de densification E6, un matériau de densification liquide, ici du silicium Si, est coulé sur la pièce crue 20 : le matériau de densification pénètre alors par capillarité au sein de la pièce crue 20, que ce soit dans sa première partie 21 ou sa deuxième partie 22, et remplit les porosités résiduelles de la pièce crue 20.

Après refroidissement et solidification du matériau de densification, on obtient une pièce brute 30 ne possédant plus, ou pratiquement plus, de porosités. De manière analogue à la pièce crue, la pièce brute 30 possède une première partie 31, munie du renfort formé par la préforme fibreuse 10 et noyé dans la matrice, et une deuxième partie 32, située au sein des tranchées 18, dépourvue du renfort fibreux 10 et constituée exclusivement de matrice.

Il est alors possible lors d'une étape E7 d'usinage, de préférence par électroérosion, de former les rainures 66 au sein de la deuxième partie 32, sans entamer le renfort fibreux 10, afin d'obtenir le secteur d'anneau final 61.

Naturellement, d'autres usinages sont également possibles dans la deuxième partie 32 de la pièce brute 30 sans mettre à nu de fibres du renfort fibreux 10. De plus, certaines faces du secteur d'anneau 61, et notamment la face principale interne 63p, peuvent recevoir un revêtement thermique. Les faces inter-secteurs 63i sont pour leur part de préférence dépourvues d'un tel revêtement thermique.

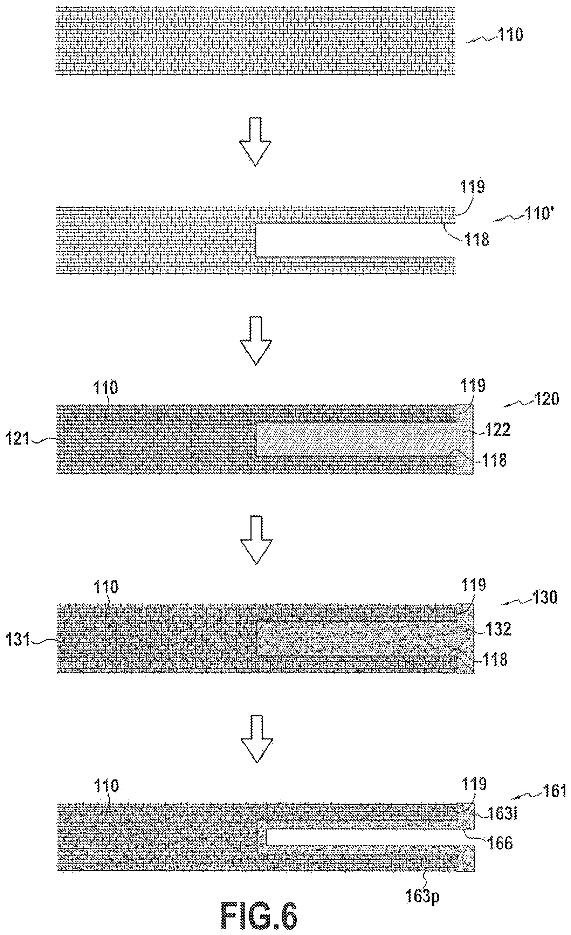

La FIG 6 illustre un deuxième exemple de réalisation du procédé proposé. Seules les différences avec le premier exemple seront décrites. En particulier, la succession des différentes étapes reste identique à celle de la FIG. 3, seule l'étape E3 d'injection de la barbotine étant mise en oeuvre différemment.

Ainsi, le procédé débute avec le tissage E1 d'une préforme fibreuse 110 analogue à celle du premier exemple. Elle subit une étape E2 de dépôt d'interphase analogue à celle du premier exemple puis une étape d'usinage E2' analogue à celle du premier exemple conduisant à l'obtention d'une préforme consolidée et découpée 110' munie de tranchées 118 pratiquées dans chacune de ses faces latérales 119.

La préforme consolidée et découpée 110' est alors transférée dans un moule pour subir une étape E3 d'injection d'une barbotine céramique. De manière analogue à l'exemple précédent, la barbotine comprend un solvant, ici de l'eau, une poudre céramique, ici du carbure de silicium SiC, et un liant organique, ici de l'alcool polyvinylique, avec des concentrations identiques.

En revanche, le moule utilisé possède une forme différente de celui du premier exemple. En effet, il est prévu de manière à épouser la forme de la préforme 110' tout en laissant un volume libre à l'intérieur des tranchées 18 mais également en surface des faces latérales 119 de la préforme. Ainsi, lorsque la barbotine est injectée dans le moule, elle imprègne d'une part la préforme 110' et remplit d'autre part le volume libre laissé à l'intérieur des tranchées 118 et devant les faces latérales 119 de la préforme 110'.

Une étape de séchage E4 est alors conduite de manière analogue au premier exemple. Ainsi, à l'issue de l'étape de séchage E4, on obtient une pièce crue 120 possédant une première partie 121 munie du renfort formé par la préforme fibreuse 110 et une deuxième partie 122, dépourvue du renfort fibreux 110 et constituée de poudre céramique agglomérée possédant un taux de compaction supérieur à 50%. Les surfaces principales 119 de la préforme 110 se retrouvent alors à l'interface entre ces première et deuxième parties 121, 122 de la pièce crue 120.

La pièce crue 120 ainsi obtenue subit ensuite une étape E5 de recuit et de pré-frittage analogue au premier exemple. Une fois cette étape E5 terminée, la pièce crue 120 est démoulée est transférée pour subir une étape de densification E6 analogue au premier exemple.

Après refroidissement et solidification du matériau de densification, on obtient une pièce brute 130 ne possédant plus, ou pratiquement plus, de porosités. De manière analogue à la pièce crue, la pièce brute 130 possède une première partie 131, munie du renfort formé par la préforme fibreuse 110 et noyé dans la matrice, et une deuxième partie 132, dépourvue du renfort fibreux 110 et constituée exclusivement de matrice.

En particulier, puisque les surfaces principales 119 de la préforme 110 s'étendaient à l'intérieur de la pièce crue 120, la densification au niveau de ces surfaces latérale 119 a pu être complète et homogène, sans effet de bord.

Il est alors possible lors d'une étape E7 d'usinage, de préférence par électroérosion, de former au sein de la deuxième partie 132 les rainures 166, sans entamer le renfort fibreux 110, afin d'obtenir le secteur d'anneau final 161.

Dans ce deuxième exemple, les couches de matrice dépourvue de renfort fibreux obtenues en surface des faces latérales 119 de la préforme 110 permettent de protéger les surfaces inter-secteurs 163i du secteur final 161 sans qu'il soit nécessaire d'y déposer un revêtement thermique spécifique.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels, à condition de rester dans la portée des revendications. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Procédé de fabrication d'une pièce en CMC munie d'au moins une découpe, comprenant les étapes suivantes :
fourniture (E1) d'un renfort fibreux (10),
formation (E2') d'une cavité (18) dans une portion du renfort fibreux (10),
injection (E3) d'une barbotine comprenant au moins une poudre céramique et un solvant, la barbotine étant injectée de manière à imprégner le renfort fibreux (10) et à remplir la cavité (18) du renfort fibreux (10),
séchage (E4) de l'ensemble obtenu,
densification (E6) par infiltration d'un matériau de densification liquide et solidification dudit matériau de densification,
usinage (E7) d'au moins une découpe (66) dans la pièce brute (30) obtenue au sein du volume correspondant à la cavité (18) du renfort fibreux (10).

2. Procédé selon la revendication 1, dans lequel le renfort fibreux (10) est réalisé par tissage 3D (E1).

3. Procédé selon la revendication 1 ou 2, dans lequel, au cours de l'étape d'injection de la barbotine (E3), la barbotine est injectée de manière à remplir en outre un volume situé à la surface de la portion (119) du renfort fibreux (110) dans laquelle a été formée la cavité (118).

4. Procédé selon l'une quelconque des revendications 1 à 3, dans lequel la découpe (66) usinée dans la pièce brute (30) est une rainure possédant une largeur inférieure à 1 mm.

5. Procédé selon l'une quelconque des revendications 1 à 4, dans lequel la découpe (66) usinée dans la pièce brute (30) est une rainure possédant une profondeur au moins trois fois plus importante que sa largeur.

6. Procédé selon l'une quelconque des revendications 1 à 5, dans lequel l'étape d'usinage (E7) est réalisée par fraisage, rectification et/ou électroérosion.

7. Procédé selon l'une quelconque des revendications 1 à 6, comprenant en outre une étape de dépôt d'un revêtement de protection sur au moins une face (63p) de la pièce finale (61) qui est dépourvue de découpe (66), et
dans lequel la face (63i) de la pièce finale (61) dans laquelle a été usinée la découpe (66) est dépourvue de revêtement de protection.

## Patentansprüche

1. Verfahren zur Herstellung eines Teils aus CMC, das mit mindestens einem Ausschnitt versehen ist, das die folgenden Schritte umfasst:
Bereitstellen (E1) einer Faserverstärkung (10),
Bilden (E2') eines Hohlraums (18) in einem Abschnitt der Faserverstärkung (10),
Einspritzen (E3) eines Schlickers, der mindestens ein Keramikpulver und ein Lösungsmittel umfasst, wobei der Schlicker derart eingespritzt wird, dass er die Faserverstärkung (10) tränkt und den Hohlraum (18) der Faserverstärkung (10) füllt,
Trocknen (E4) des erhaltenen Ganzen,
Verdichten (E6) durch Infiltration eines flüssigen Verdichtungsmaterials und Verfestigen des Verdichtungsmaterials,
Bearbeiten (E7) mindestens eines Ausschnitts (66) in dem Formling (30), der im Inneren des Volumens erhalten wird, das dem Hohlraum (18) der Faserverstärkung (10) entspricht.

2. Verfahren nach Anspruch 1, wobei die Faserverstärkung (10) durch 3D-Weben (E1) hergestellt wird.

3. Verfahren nach Anspruch 1 oder 2, wobei während des Schrittes des Einspritzens des Schlickers (E3) der Schlicker derart eingespritzt wird, dass er ferner ein Volumen füllt, das sich an der Oberfläche des Abschnitts (119) der Faserverstärkung (110) befindet, in dem der Hohlraum (118) gebildet wurde.

4. Verfahren nach einem der Ansprüche 1 bis 3, wobei der in dem Formling (30) bearbeitete Ausschnitt (66) eine Rille ist, die eine Breite von kleiner als 1 mm besitzt.

5. Verfahren nach einem der Ansprüche 1 bis 4, wobei der in dem Formling (30) bearbeitete Ausschnitt (66) eine Rille ist, die eine Tiefe besitzt, die mindestens drei Mal größer als ihre Breite ist.

6. Verfahren nach einem der Ansprüche 1 bis 5, wobei der Schritt des Bearbeitens (E7) durch Fräsen, Schleifen und/oder Elektroerosion ausgeführt wird.

7. Verfahren nach einem der Ansprüche 1 bis 6, das ferner einen Schritt des Aufbringens einer Schutzbeschichtung auf mindestens einer Seite (63p) des endgültigen Teils (61) umfasst, die keinen Ausschnitt (66) aufweist, und
wobei die Seite (63i) des endgültigen Teils (61), in welcher der Ausschnitt (66) bearbeitet wurde, keine Schutzbeschichtung aufweist.

## Claims

1. A method for manufacturing a CMC part provided with at least one cutout, comprising the following steps:
- providing (E1) a fibrous reinforcement (10),
- forming (E2') a cavity (18) in a portion of the fibrous reinforcement (10),
- injecting (E3) a slip comprising at least a ceramic powder and a solvent, the slip being injected so as to impregnate the fibrous reinforcement (10') and to fill the cavity (18) of the fibrous reinforcement (10),
- drying (E4) the obtained assembly,
- carrying out a densification (E6) by infiltration of a liquid densification material and solidification of said densification material,
- machining (E7) at least one cutout (66) in the obtained blank (30) within the volume corresponding to the cavity (18) of the fibrous reinforcement (10).

2. The method according to claim 1, wherein the fibrous reinforcement (10) is made by 3D-weaving (E1).

3. The method according to claim 1 or 2, wherein, during the slip injection step (E3), the slip is injected so as to further fill a volume located on the surface of the portion (119) of the fibrous reinforcement (110') in which the cavity (118) has been formed.

4. The method according to any one of claims 1 to 3, wherein the cutout (66) machined in the blank (30) is a groove having a width of less than 1 mm.

5. The method according to any one of claims 1 to 4, wherein the cutout (66) machined in the blank (30) is a groove having a depth of at least three times greater than its width.

6. The method according to any one of claims 1 to 5, wherein the machining step (E7) is carried out by milling, grinding and/or electrical discharge machining.

7. The method according to any one of claims 1 to 6, further comprising a step of depositing a protective coating on at least one face (63p) of the final part (61) which is devoid of cutout (66) , and
wherein the face (63i) of the final part (61) in which the cutout (66) has been machined is devoid of protective coating.
